# EUROPEAN PATENT SPECIFICATION

(11) **EP 0 553 389 B1**
(45) Date of publication and mention of the grant of the patent: **26.07.1995**
(21) Application number: 92104140.6
(22) Date of filing: 11.03.1992
(51) Int. Cl.: A21D 13/08

(54) **A cookie with a high cereal content**
Keks mit einem hohen Getreidegehalt
Biscuit à haute teneur de céréales

(30) Priority: 31.01.1992 IT MI920187
(43) Date of publication of application: 04.08.1993
(73) Proprietor: BARILLA G. e R. F.lli - Società per Azioni, 43100 Parma (IT)
(72) Inventor: Russo, Claudio, I-41100 Modena (IT); Solzi, Maria Luisa, I-43100 Parma (IT)
(74) Representative: Vannini, Torquato

(56) References cited:
- WO-A-91/19421
- US-A- 3 108 003
- US-A- 3 821 443

## Description

The present invention relates in general to a cookie with a high cereal content which, from an organoleptic point of view, is similar and wholly comparable to a good-quality cookie, as will become clear from the following description.

In particular, the invention relates to a nutritionally balanced cookie with a high content of cereal flakes.

It is well-known that a need to provide a cookie which combines a high cereal content with a nutritionally balanced profile and good organoleptic qualities has been felt for some time in the field of cookies and similar baked products.

A cookie is generally considered to be nutritionally balanced if it contains about 16% proteins, about 15% lipids and about 65% carbohydrates by weight of the finished dry product and has a calorific value of 460 Kcal/100 gr derived as follows: 15% from proteins, 30% from lipids and 55% from carbohydrates. A balanced American diet provides for nourishment based on products which provide 12% of the calories from proteins, 30% from fats and about 58% from carbohydrates. The current nutritional state of affairs in western countries involves dietary proposals to provide 12% of the calories from proteins, 40% from fats and 48% from carbohydrates.

As regards their nutritional profiles, the technology of the field in question produces balanced cookies, the formulations of which are based primarily on their protein content.

In this connection, it is recognised that the higher the protein content of a cookie, that is, the greater its nutritional value, the more difficult it is to provide it with acceptable organoleptic qualities.

Thus, for example, the patent EP 0107315, which is included herein for reference, describes a nutritionally-balanced dietary cookie with good organoleptic qualities which has up to 25% proteins (mainly casein) but in which there is no significant quantity of cereal fibres, particularly cereal flakes. In fact, even when they are present only in small quantities, cereal fibres cause the product to be notably compact (dense), making it hard, very difficult to chew and, quite often, giving it an unpleasant flavour and rendering it unpalatable. These decidedly negative properties are increased if the cookie has a substantial protein content.

U.S. patents Nos. 3,687,686, 3,687,687 and 3,689,279 propose the use of hydrolysed soya to improve the nutritional value of ready-to-eat cereals whilst avoiding the normal tendency of these products to form hard structures and to be difficult to chew. According to these patents, the proteolytic hydrolysis of the soya and its subsequent combination with cereals produces soft, malleable products. The taste, structure and palatability of these products, however, are far from those of high-quality cookies.

Up to now, many significant attempts have been made to produce cookies with a high content of proteins and/or cereal fibres but none has lead to acceptable results.

The problem behind the present invention, therefore, is that of providing a cookie which, as well as having organoleptic properties wholly comparable with the conventionally recognised properties of a good-quality cookie, has a high content of cereal fibres, particularly cereal flakes, and which, at the same time, can have a balanced nutritional profile in accordance with the most up-to-date requirements in the field.

According to the invention, this problem is solved by a cookie, characterised in that it has an expanded, cellular structure and includes from 7 to 20% by weight of the total solids of at least one protein and from 10% to 65% by weight of the total solids of cereal flakes which are incorporated and dispersed in the expanded cellular structure.

According to a further important characteristic, the expanded cellular structure of the cookie of the invention is produced by at least one frothing protein which can be whipped and which is selected from the group including egg-white proteins, milk proteins, vegetable proteins and mixtures thereof, as they are and/or partially hydrolysed.

The preferred frothing protein is that derived from egg-white.

It has been found that up to 50% of the egg-white proteins can be replaced by the compound known commercially by the name MILKFOAM, which includes 25% milk proteins and 66.4% carbohydrates, or by the compound known commercially by the abbreviation TMP-1150, which includes 86.7% partially hydrolysed milk proteins. Whey proteins (a proteinic extract with about 70-80% proteins) can also be used in combination with suitable stabilisers, particularly and preferably, medium-low DE maltodextrins.

The vegetable proteins useful for the invention are selected from the proteins extracted from oleaginous substances such as, for example, peas, lentils, beans, soya beans, groundnuts, hazelnuts, almonds, et cetera.

It was found that the expanded cellular (foam) structure of the cookie of the invention could be produced solely by proteins of vegetable origin but the best results were achieved when these were mixed with egg-white proteins.

Of the sources of vegetable protein, soya is preferred because of its high protein contribution of up to 70% calculated in relation to the dry product.

Although the contribution of milk proteins, and particularly of casein, to the nutritional value of cookies prepared therewith is recognised, these proteins have shown a certain tendency to make the structure more compact, thicker and, essentially, harder so that it is unpleasant to chew. Their use in the present invention, which is envisaged in order to satisfy certain requirements of use, is consequently limited to small percentages and in combination with egg-white proteins.

It should be noted that, when the expanded cellular (foam) structure of the invention is produced by proteins, it can simultaneously provide the required protein contribution, the desired organoleptic properties (particularly lightness, friability, and palatability), and an effective and surprising support for the cereal flakes, up to 65% by weight or more of which may be included.

Preferred cereals are bran, wholemeal wheat, oats, maize, barley, and rye, and mixtures thereof.

The fact that cereal flakes can be used is truly surprising in view of the quantities used (up to 65% or more by weight) and the organoleptic properties of the cookies produced thereby.

To advantage, the proteinaceous structure of the cookie of the invention is stabilised by a suitable predetermined quantity of sugars and/or native starches and similar food stabilisers.

Good results have been achieved with the use of a stabiliser selected from the hydrolysed derivatives of starch, particularly glucose syrup and maple sugar syrup in quantities of between 7.2 and 15% of the dry weight, and sucrose.

Of the stabilisers, maize starch, potato flour, some modified starches, pectin and hydrocolloids are particularly favoured. The best are the low-medium DE maltodextrin stabilisers.

If the cookie of the invention is required to have the correct nutritional balance, it includes up to 12% of its dry weight of fats of vegetable origin.

These may be in liquid (oil) or solid form at ambient temperature or even in the form of aqueous emulsions.

An edible oil such as groundnut oil, rapeseed oil, cottonseed oil, a fat such as copra fat or groundnut fat or even an emulsion such as margarine may be used.

Surprisingly, it was found that the fats used, and particularly the oils, made an effective and unexpected contribution to the stability of the proteinaceous, expanded cellular structure of the invention.

In order to produce a cookie according to the invention, a precise preliminary mixture of the predetermined quantities of protein (or proteins) and possibly of the selected stabiliser is prepared usually in water. The mixture is then whipped to produce an expanded cellular mass (a foam).

Naturally, the ingredients may be mixed and whipped substantially simultaneously and in the same receptacle with the use of suitable stirring means such as, for example, whisks or the like.

The predetermined quantities of cereal flakes and vegetable fat, preferably in liquid form, are then added gradually to the whipped mass whilst vigorous stirring is maintained.

When the cereal flakes are dispersed evenly in the expanded mass (which will constitute the supporting structure of the cookie to be produced) the mass is shaped and then baked in an oven. According to the ingredients used and the nature and quantities thereof, and according to the shapes and sizes of the cookies to be produced, the baking is carried out within a temperature range of from 60 to 220°C for times of between 10 and 30 minutes.

When the cookies have been taken out of the oven, they are cooled and wrapped.

Preferably, before they are cooled, the cookies are dried, that is, they undergo a heat treatment to facilitate the elimination of the moisture remaining in the centre of the cookie so as correspondingly to reduce any tensions within the expanded structure, thus reducing the risks of cracking or breakage.

The characteristics and advantages of the invention will become clearer from the following description of some examples of the preparation of dietary cookies according to the invention. In the examples, all the quantities are parts by weight unless indicated otherwise.

### EXAMPLE 1

25 parts of egg-white, 72 parts of sugars, 1 part of salt, 2 parts of skimmed milk powder and a sufficient quantity of water were mixed intimately in a stainless steel receptacle with variable-speed whisks.

The mixing (whipping) continued until a highly cellular whipped mass was produced.

Vigorous stirring was maintained and, at the same time, 12 parts of rolled oats, that is, 10% by weight of the total solids, were added gradually to the whipped mass. The average size of the rolled oat flakes used was 15-20 mm².

The stirring of the whipped mass continued after all the rolled oats had been added until a homogeneous mixture was produced.

Parallelepipedal pieces were formed from the whipped mass by conventional techniques and were baked in an oven for about 25 minutes at a temperature of 85°C. When the baking was finished, a plurality of cookies was taken out of the oven, each cookie having a density of 0.2-0.3 gr/cm³ and a very light and pleasantly yielding, slightly crispy structure, in contrast with the more crunchy structure of the cereal flakes. The flavour is very delicate because of the foamy structure and can be enriched at will by pieces of chocolate or fruit or other ingredients well-known in the confectionery art as useful additives to confer flavour and an attractive appearance (for example, cocoa, a covering of chocolate, pieces of dried fruit, etc).

The cookie can be dipped in hot or cold drinks without losing its shape or absorbing too much liquid or can be eaten like a good-quality biscuit.

### EXAMPLE 2

20 parts of powdered egg-white, 10 parts of frothing milk proteins, 48 parts of sugars, 1 part of salt, 0.4 parts of ammonium bicarbonate, and 0.2 parts of sodium pyrophosphate acid were mixed intimately for 3 minutes at a low speed in a stainless steel receptacle with variable-speed whisks. After the stirrer had been brought to its maximum speed, a suitable quantity of water was then added and mixing continued for 5-6 minutes, producing a highly cellular whipped mass. The high-speed mixing was maintained and 20 parts of sunflower oil were then added until a specific weight of 0.180 was achieved.

Finally, a quantity of maize flakes equal to 50% by weight of the previously whipped mass and 33% of the total solids was added.

The apparent density of the mixture produced was between 0.28 and 0.30 gr/cm².

The mixture was formed into parallelepipedal pieces which were baked in an oven for about 30 minutes at a temperature of 100-110°C. When the baking was finished, a corresponding plurality of cookies was taken out of the oven, all the cookies having 3-4% residual moisture, a particularly light structure and an extremely pleasant taste.

### EXAMPLE 3

8 parts of powdered egg-white, 15 parts of frothing milk proteins, 60 parts of sugars, 1 part of salt and one part of ammonium bicarbonate were mixed in a receptacle exactly the same as that used for the previous examples. The mixing continued at a slow speed for about 3 minutes and the stirrer was then brought to its maximum speed and water was added. The mixing continued for 4 minutes to produce a highly cellular whipped mass. 6 parts of corn oil and 9 parts of sugars were then added simultaneously and high-speed stirring was maintained. The mixing continued for a further few minutes to achieve a specific weight of 0.18-0.20.

A quantity of rolled oats equal to 40% by weight of the whipped mass, that is, 28.5% by weight of the total solids, was then added to the whipped mass which continued to be stirred at high speed. The mixing continued for a few minutes until the desired homogeneity was achieved. A mixture with an apparent density of between 0.28 and 0.33 gr/cm³ was thus produced.

### EXAMPLE 4

30 parts of powdered egg-white, 4 parts of maltodextrin, 43 parts of sugars and 10 parts of skimmed milk powder with 2 parts of ammonium bicarbonate were mixed in a stainless steel receptacle. The mixing was continued for a few minutes and the stirrer was then brought to a high speed and water was added. After 7 minutes a highly cellular whipped mass was produced, 11 parts of sunflower oil were added thereto, and the mixing was continued for a further few minutes, still at high speed, until a specific weight of 0.17-0.20 was achieved.

The high-speed stirring was maintained and a quantity of barley flakes equal to 90% by weight of the whipped mass, that is, 45% by weight of the total solids, was then added to the whipped mass, followed by 10% by weight of chocolate chips.

The mixture produced had an apparent density of 0.32 gr/cm².

### EXAMPLE 5

The cookie-production method of Example 4 was repeated with the sole exception that the quantity of cereal flakes, particularly barley flakes, added was 12% by weight of the whipped mass, that is, 11% by weight of the total solids.

### EXAMPLE 6

The method of Example 4 was repeated with the use of 14 parts of powdered egg-white, 10 parts of pea proteins (COSUCRA), one part of a whipping agent, 54 parts of sugars, 10 parts of potato flour, one part of salt and 10 parts of corn oil. 60% by weight of wholemeal wheat flakes, that is, 37.5% by weight of the total solids, were added to the whipped mass.

### EXAMPLE 7

The cookie-production method of Example 6 was repeated with the sole exception that the quantity of cereal flakes added was 24% by weight of the whipped mass, that is, 20% by weight of the total solids.

### EXAMPLE 8

The method of Example 4 was repeated with the use of 7 parts of powdered egg-white, 14 parts of frothing milk proteins, one part of a whipping agent, 5 parts of maltodextrin, 36 parts of sugars, one part of waxy maize starch, and one part of sodium bicarbonate. 35 parts of corn oil were added to the highly cellular whipped mass and a quantity of bran and rolled oats equal to 65% of the whipped mass, that is, 39.4% by weight of the total solids was then added to produce a mixture having an apparent density of the order of 0.32 gr/cm³.

The mixture was formed into various characteristic cookie-shapes and was baked at 110°C for about half an hour to achieve a final moisture content of 3-4%.

### EXAMPLE 9

Again by the method of Example 4, a mixture was produced with the use of 7 parts of powdered egg-white, 9 parts of pea proteins (COSUCRA), 7.5 parts of maltodextrin, 40 parts of sugars, 34 parts of corn oil, one part of salt, 1 part of sodium pyrophosphate acid, and 0.5 parts of sodium bicarbonate.

Good stirring was maintained and a quantity of rolled oats equal to 90% of the whipped mass, that is, 65% by weight of the total solids, was then added.

The cookies produced had a residual moisture content of 4% and a density of 0.30 gr/cm³.

### EXAMPLE 10

Nutritionally balanced cookies with a high content of cereal flakes were produced by the method of the previous examples with the use of the following recipe.

| | grams of the dry residue |
|---|---|
| MAIZE FLAKES | 40 |
| POWDERED EGG-WHITE | 7 |
| PROTEIN EXTRACT (pea) | 7.7 |
| MAIZE STARCH | 17.4 |
| SUGAR | 13 |
| SEED OIL | 15 |
| STABILISER | 3 |
| TOTAL | 103.1 |

## Claims

1. A cookie with a high cereal content, characterised in that it has an expanded cellular structure and includes from 7 to 20% by weight of the total solids of at least one protein and from 10 to 65% by weight of the total solids of cereal flakes which are dispersed and incorporated in the expanded cellular structure.

2. A cookie according to Claim 1, characterised in that the expanded cellular structure is formed by at least one frothing protein which can be whipped and which is selected from the group including egg-white proteins, milk and whey proteins, vegetable proteins and mixtures thereof, as they are or partially hydrolysed.

3. A cookie according to Claim 2, characterised in that the frothing protein is egg-white protein.

4. A cookie according to Claim 2, characterised in that the vegetable proteins include proteins extracted from oleaginous substances including peas, lentils, beans, soya beans, groundnuts, hazelnuts, almonds, et cetera.

5. A cookie, according to Claim 1, characterised in that the cereals are selected from bran, wholemeal wheat, oats, maize, rye, barley and the like, and mixtures thereof.

6. A cookie according to Claim 1, characterised in that it also includes a stabiliser for stabilising its structure, selected from the group including native starches, maize starch, potato flour, modified starches, pectin and hydrocolloids.

7. A cookie according to Claim 1, characterised in that it includes a maltodextrin stabiliser for stabilising its structure.

8. A cookie according to Claim 6, characterised in that the percentage of the stabiliser used is between 7.2 and 15% of the solids by weight.

9. A cookie according to Claim 7, characterised in that the percentage of the maltodextrin stabiliser used is between 2 and 5% of the total solids by weight.

10. A cookie according to Claim 1, characterised in that it includes up to 12% of the solids by weight of vegetable fats.

11. A cookie according to Claim 10, characterised in that the fats are in liquid form and are selected from groundnut oil, rapeseed oil, cottonseed oil and the like.

12. A cookie according to Claim 10, characterised in that the fats are solid and are selected from the group including copra fat and groundnut fat.

13. A cookie according to Claim 10, characterised in that the fat is in the form of an emulsion in water.

## Patentansprüche

1. Keks mit hohem Getreideanteil, gekennzeichnet durch eine expandierte zellige Struktur mit, bezogen auf das Gewicht der gesamten Feststoffe, 7 bis 20 Gew.-% mindestens eines Proteins und 10 bis 65 Gew.-% an in der (die) expandierte(n) zellige(n) Struktur dispergierten und eingearbeiteten Getreideflocken.

2. Keks nach Anspruch 1, dadurch gekennzeichnet, daß die expandierte zellige Struktur aus mindestens einem schlagfähigen, aus der Gruppe Eiweißproteine, Milch- und Molkeproteine, pflanzliche Proteine und Mischungen derselben in unverändertem oder teilweise hydrolysiertem Zustand ausgewählten Schäumprotein gebildet ist.

3. Keks nach Anspruch 2, dadurch gekennzeichnet, daß das Schäumprotein aus Eiweißprotein besteht.

4. Keks nach Anspruch 2, dadurch gekennzeichnet, daß die pflanzlichen Proteine aus ölhaltigen Substanzen einschließlich von Erbsen, Linsen, Bohnen, Sojabohnen, Erdnüssen, Haselnüssen, Mandeln und dergl. extrahierte Proteine umfassen.

5. Keks nach Anspruch 1, dadurch gekennzeichnet, daß das Getreide aus Kleie, Weizenvollmehl, Hafer, Mais, Roggen, Gerste und dergl. und Mischungen derselben ausgewählt ist.

6. Keks nach Anspruch 1, dadurch gekennzeichnet, daß er ferner einen Stabilisator zur Stabilisierung seiner Struktur, ausgewählt aus der Gruppe native Stärkesorten, Maisstärke, Kartoffelmehl, modifizierte Stärkesorten, Pectin und Hydrokolloide, enthält.

7. Keks nach Anspruch 1, dadurch gekennzeichnet, daß er zum Stabilisieren seiner Struktur einen Maltodextrinstabilisator enthält.

8. Keks nach Anspruch 6, dadurch gekennzeichnet, daß, bezogen auf das Feststoffgewicht, der Anteil des verwendeten Stabilisators 7,2 und 15% beträgt.

9. Keks nach Anspruch 7, dadurch gekennzeichnet, daß, bezogen auf das Gesamtgewicht der Feststoffe, der Anteil des verwendeten Maltodextrinstabilisators 2 und 5% beträgt.

10. Keks nach Anspruch 1, dadurch gekennzeichnet, daß er bis zu 12% des Feststoffgewichts an pflanzlichen Fetten enthält.

11. Keks nach Anspruch 10, dadurch gekennzeichnet, daß die Fette in flüssiger Form vorliegen und aus Erdnußöl, Rapssaatöl, Baumwollsaatöl und dergl. ausgewählt sind.

12. Keks nach Anspruch 10, dadurch gekennzeichnet, daß die Fette in fester Form vorliegen und aus der Gruppe Coprafett und Erdnußfett ausgewählt sind.

13. Keks nach Anspruch 10, dadurch gekennzeichnet, daß das Fett in Form einer Emulsion in Wasser vorliegt.

## Revendications

1. Biscuit à haute teneur en céréales, caractérisé en ce qu'il possède une structure cellulaire expansée et comprend de 7 à 20 % en poids de la totalité des solides constitués par au moins une protéine et de 10 à 65 % en poids de la totalité des solides constitués par des flocons de céréales dispersés et incorporés dans la structure cellulaire expansée.

2. Biscuit selon la revendication 1, caractérisé en ce que la structure cellulaire expansée est formée par au moins une protéine génératrice de mousse qui peut être fouettée et qui est choisie dans le groupe comprenant les protéines de blanc d'oeuf, les protéines de lait et de petit lait, les protéines végétales et leurs mélanges, telles quelles ou partiellement hydrolysées.

3. Biscuit selon la revendication 2, caractérisé en ce que la protéine génératrice de mousse est la protéine de blanc d'oeuf.

4. Biscuit selon la revendication 2, caractérisé en ce que les protéines végétales comprennent les protéines extraites de substances oléagineuses comprenant les pois, les lentilles, les haricots, les graines de soja, les arachides, les noisettes, les amandes, etc.

5. Biscuit selon la revendication 1, caractérisé en ce que les céréales sont choisies parmi le son, la farine de blé complet, les avoines, le mais, le seigle, l'orge et similaires, et leurs mélanges.

6. Biscuit selon la revendication 1, caractérisé en ce qu'il comprend également un agent stabilisant pour stabiliser sa structure, choisi dans le groupe comprenant les amidons naturels, l'amidon de maïs, la farine de pomme de terre, les amidons modifiés, la pectine et les hydrocolloïdes.

7. Biscuit selon la revendication 1, caractérisé en ce qu'il comprend un agent stabilisant de maltodextrine pour stabiliser sa structure.

8. Biscuit selon la revendication 6, caractérisé en ce que le pourcentage d'agent stabilisant utilisé est entre 7,2 et 15 % des solides en poids.

9. Biscuit selon la revendication 7, caractérisé en ce que le pourcentage d'agent stabilisant de maltodextrine utilisé est entre 2 et 5 % de la totalité des solides en poids.

10. Biscuit selon la revendication 1, caractérisé en ce qu'il comprend jusqu'à 12 % des solides en poids de graisses végétales.

11. Biscuit selon la revendication 10, caractérisé en ce que les graisses sont sous forme liquide et sont choisies parmi l'huile d'arachide, l'huile de colza, l'huile de graine de coton et similaires.

12. Biscuit selon la revendication 10, caractérisé en ce que les graisses sont sous forme solide et sont choisies dans le groupe comprenant la graisse de coprah et la graisse d'arachide.

13. Biscuit selon la revendication 10, caractérisé en ce que la graisse est sous forme d'une émulsion dans l'eau.
